(19) **Europäisches Patentamt / European Patent Office / Office européen des brevets**

(11) **EP 1 436 565 B1**

(12) **EUROPEAN PATENT SPECIFICATION**

(45) Date of publication and mention
of the grant of the patent:
**31.10.2007 Bulletin 2007/44**

(21) Application number: **02768179.0**

(22) Date of filing: **25.09.2002**

(51) Int Cl.:
*F28F 21/04* (2006.01)   *C04B 35/49* (2006.01)

(86) International application number:
**PCT/NO2002/000339**

(87) International publication number:
**WO 2003/033986 (24.04.2003 Gazette 2003/17)**

(54) **A CERAMIC HEAT EXCHANGER**

KERAMIKWÄRMETAUSCHER

ECHANGEUR DE CHALEUR CERAMIQUE

(84) Designated Contracting States:
**AT BE BG CH CY CZ DE DK EE ES FI FR GB GR
IE IT LI LU MC NL PT SE SK TR**

(30) Priority: **19.10.2001 NO 20015135**

(43) Date of publication of application:
**14.07.2004 Bulletin 2004/29**

(73) Proprietor: **NORSK HYDRO ASA
0240 Oslo (NO)**

(72) Inventors:
• **JULSRUD, Stein
N-3713 Skien (NO)**
• **VIGELAND, Bent, Erlend
N-3712 Skien (NO)**

(74) Representative: **Weiss, Wolfgang et al
Weickmann & Weickmann
Patentanwälte
Postfach 86 08 20
81635 München (DE)**

(56) References cited:
**US-A- 6 117 560    US-B1- 6 258 467**

• **PATENT ABSTRACTS OF JAPAN vol. 012, no. 272
& JP 63 054 595 A (EBARA CORP) 08 March 1988**

Remarks:
The file contains technical information submitted after
the application was filed and not included in this
specification

EP 1 436 565 B1

**Description**

The present invention relates to ceramic materials for heat exchangers which are generally applicable, but which are particularly suited in applications with high temperatures and high steam pressures.

Industrial processes frequently operate inefficiently due to waste heat losses from high temperature exhaust gases. Likewise, several potential industrial processes may work at less than optimum efficiency unless heat from high temperature exhaust gases can be recovered. Examples are processes involving steam reforming of natural gas or partial or full oxidation of natural gas. In the absence of heat exchangers capable of operating at sufficiently high temperatures, efficiency is lost either through the lack of waste heat recovery, or through the reduction of process temperatures. In many cases it may be beneficial to generate exhaust gases or product gases having temperatures in the range of 900 to 1200°C, and in certain cases in excess of 1200°C.

It is well known in the art that conventional heat exchangers made from metals and alloys can not be used at temperatures exceeding 800-1000°C. At higher temperatures metal based heat exchangers lack the mechanical strength required for prolonged operation.

Use of certain ceramic materials, however, increases the allowable operating temperature of the heat exchanger. Silicon carbide for example is very refractory with a melting temperature of well above 2000 °C. A serious disadvantage with SiC, however, is the potentially fast evaporation of silicon containing gas species from the solid surface when steam is present in the gas. When oxygen (as e.g. $O_2$, $H_2O$, $CO_2$, CO) is present in the gas contacting the SiC heat exchanger, a layer of $SiO_2$ forms on the surface. This layer is attacked by water and the highly volatile $Si(OH)_4$ is formed and evaporates from the heat exchanger. This evaporation may have various serious implications. Firstly, the consumption of heat exchanger material will lead to thinning of the walls and may eventually lead to a mechanical failure and cracking of the heat exchanger. Secondly, the evaporated material may condense in cooler parts of the heat exchanger or in cooler parts of other components and lead to clogging of fluid paths, which results in increased pressure losses. Thirdly, $Si(OH)_4$ may react with or condense in cooler functional components, e.g. catalysts, thereby interfering with the functionality of the component.

All potential heat exchanger materials containing silicon (e.g. $Si_3N_4$, cordierite) will be associated with these problems caused by the evaporation of $Si(OH)_4$ when steam is present in the gas.

Moreover, most other ceramic materials will have unacceptably high vapour pressures of metal hydroxide species when used above 1000°C in the presence of steam. Aluminium nitride, for example, will react with steam and form nitrogen gas and $Al(OH)_3$ which similarly to $Si(OH)_4$ is highly volatile.

The main object of the present invention was to develop ceramic compositions (materials) for heat exchangers that are highly refractory and highly stable in a wide range of oxygen partial pressures and in the presence of gases such as $CH_4$ and other hydrocarbons, $H_2O$, $CO_2$, $H_2$, CO, and $O_2$ and which are capable of operating at temperatures ranging from below 400 to well above 1300°C for a prolonged period of time.

Another object of the present invention was to develop ceramic compositions suitable for manufacturing heat exchangers that implies low level of evaporation from the heat exchanger at high temperatures.

The inventors found that certain classes of materials have unique properties and are particularly suitable in heat exchangers for use at high temperatures and in the presence of steam. Materials of these compositions are refractory and have particularly low vapour pressures in the presence of steam.

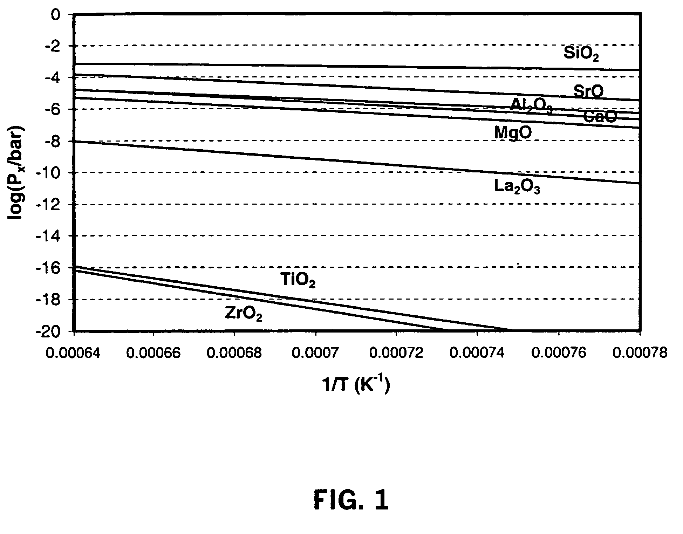

The vapour pressure above a selection of oxides in the presence of steam at a pressure of 12.7 bar and hydrogen at a partial pressure of 0.1 bar is shown as a function of inverse temperature in Figure 1. It is evident that of the oxides included in Figure 1, $La_2O_3$, $ZrO_2$, and $TiO_2$ will evaporate at a considerably lower rate than the remaining oxides. A process with a gas flow through the heat exchanger of 1 kmol/s may be taken as an example for the estimation of potential evaporation losses from the heat exchanger. Assuming that the gas flowing through the heat exchanger becomes saturated with the metal oxide or hydroxide in question, the loss at 1250°C from a $SiO_2$ surface will be 60 tonnes/year. The loss from a MgO surface will be 200 kg/year, from $La_2O_3$ 1 kg/year, and from $TiO_2$ a few micrograms per year. It is evident that the evaporation losses from all oxides in Figure 1 except $La_2O_3$, $ZrO_2$, and $TiO_2$ will be unacceptably high. Generally, a lowering of the vapour pressure will be observed when the pure oxide in question is a constituent in a multicomponent compound. But a lowering of more than two orders of magnitude is rarely observed.

Of the simple metal oxides not included in Figure 1, $HfO_2$ will have vapour pressures close to those expected for $TiO_2$ and $ZrO_2$. The vapour pressures of the lanthanide oxides will be similar to the vapour pressure expected for $La_2O_3$. $Y_2O_3$ will have lower vapour pressure than $La_2O_3$. The vapour pressures of all other usable elements will be higher than above MgO, and will hence have unacceptably high vapour pressures in processes in which the temperature exceeds 1000°C and where steam is present at relatively high pressures.

The scope of the invention in its widest sense is a ceramic heat exchanger manufactured from an oxide material where the material is represented by the formula:

$$A_{1-x}B_xO_{(3+x+z)/2}$$

where A is selected from the group consisting of La, Ce, Pr, Nd, Pm, Sm, Eu, Gd, Tb, Dy, Ho, Er, Tm, Yb, Lu, Y, and mixtures thereof, B represents Zr, Ti or Hf or mixtures thereof, x is greater than or equal to zero and less than one, and z is a number that renders the compound charge neutral and is greater than about-0.1 and less than about 0.2.

In an embodiment of the present invention the heat exchanger comprises a ceramic oxide material described by the formula

$$A_{1-x}B_xO_{(3+x+z)/2}$$

where A is selected from the group consisting of La, Ce, Pr, Nd, Pm, Sm, Eu, Gd, Tb, Dy, Ho, Er, Tm, Yb, Lu, Y, and mixtures thereof, x is equal to zero, and z is a number that renders the compound charge neutral and is greater than about -0.1 and less than about 0.2. Preferred compositions have A predominantly representing La.

In another embodiment of the present invention the heat exchanger comprises a ceramic oxide material described by the formula

$$A_{1-x}B_xO_{(3+x+z)/2}$$

where A is selected from the group consisting of La, Ce, Pr, Nd, Pm, Sm, Eu, Gd, Tb, Dy, Ho, Er, Tm, Yb, Lu, Y, and mixtures thereof, B represents Zr, Ti or Hf or mixtures thereof, x is greater than or equal to 0.48 and less than or equal to 0.52, and z is a number that renders the compound charge neutral and is greater than about -0.1 and less than about 0.2. Preferred compositions have A predominantly representing La. Even more preferred compositions have B substantially representing Zr.

Although compounds described by the enumerated formula have been reported in the past as candidates for thermal barrier coatings on metallic substrates (U.S. Patent No. 6,117,560 and U.S. Patent No. 6,258,467), their use as heat exchangers has not previously been described.

In yet another embodiment of the present invention the heat exchanger comprises a ceramic oxide material described by the formula

$$A_{1-x}B_xO_{(3+x+z)/2}$$

where A is selected from the group consisting of La, Ce, Pr, Nd, Pm, Sm, Eu, Gd, Tb, Dy, Ho, Er, Tm, Yb, Lu, Y, and mixtures thereof and is at least representing La, B represents Zr, Ti or Hf or mixtures thereof and is at least representing Ti, x is equal to 1/3, and z is a number that renders the compound charge neutral and is greater than about -0.1 and less than about 0.2. Preferred compositions of the enumerated formula have B predominantly representing Ti. Even more preferred compositions have A predominantly representing La.

The invention will be further explained and envisaged in the following examples and figures.

FIG. 1 shows the vapour pressure above a selection of oxides in the presence of steam at a pressure of 12.7 bar and hydrogen at a partial pressure of 0.1 bar as a function of inverse temperature.

FIG. 2 shows the X-ray diffractogram of the heat exchanger material of Example 1, $La_{0.5}Zr_{0.5}O_{1.75}$. The asterix (*) indicate reflections from the aluminium sample holder.

FIG. 3 shows the X-ray diffractogram of the heat exchanger material of Example 2, $La_{0.5}Ti_{0.5}O_{1.75}$. The asterix (*) indicate reflections from the aluminium sample holder.

FIG. 4 shows the linear thermal expansion characteristics of the three heat exchanger materials of Examples 1-3, $La_{0.5}Zr_{0.5}O_{1.75}$, $La_{0.5}Ti_{0.5}O_{1.75}$, and $La_{2/3}Ti_{1/3}O_{5/3}$.

FIG. 5 shows the calculated temperature profile from the cold gas through the heat exchanger wall to the hot gas for a $La_{0.5}Zr_{0.5}O_{1.75}$ heat exchanger. The calculations are described in Example 8.

## EXAMPLE 1

## PREPARATION OF $La_{0.5}Zr_{0.5}O_{1.75}$

A ceramic oxide heat exchanger material was prepared by a soft chemistry route wherein the appropriate amount of $La_2O_3$ and $ZrC_{20}H_{28}O_8$ were first dissolved in nitric acid. To this liquid mixture was added citric acid in excess, and excess water was evaporated for 3 hours at 90°C, during which time complexation takes place. The resulting gel was dried in air for 14 hours by heating to 140°C, whereupon the organic matter was removed by subjecting the sample to 500°C for 3 hours. The powder was calcined at 1300°C for 10 hours and thereby ground in a planetary mill with grinding media of yttria stabilised zirconia. The powder mixture was then combined with a binder and uniaxially cold pressed to a Ø13 mm disk at 180 MPa. The resulting porous disk was heated to 500°C at 3°/min in air to allow controlled combustion of the binder, and then further heated to 1600°C in air, maintained at 1600°C for 3 hours and cooled to room temperature. This procedure yielded a Ø10 mm disk with 97% of theoretical density. The formula representing the product may be expressed as $La_{0.5}Zr_{0.5}O_{1.75}$. The compound has a melting temperature higher than 2200°C.

**EXAMPLE 2**

**PREPARATION OF $La_{0.5}Ti_{0.5}O_{1.75}$**

A ceramic oxide heat exchanger material was prepared according to the method of Example 1 except using $TiC_{20}H_{28}O_8$ instead of $ZrC_{20}H_{28}O_8$, and using calcination and sintering temperatures of 1200°C and 1300°C, respectively, to yield a product that may be represented by the formula $La_{0.5}Ti_{0.5}O_{1.75}$. The procedure yielded a Ø10 mm disk with 98% of theoretical density. The compound has a melting temperature of around 1800°C.

**EXAMPLE 3**

**PREPARATION OF $La_{2/3}Ti_{1/3}O_{5/3}$**

A ceramic oxide heat exchanger material was prepared according to the method of Example 2 except doubling the $La_2O_3$ to $TiC_{20}H_{28}O_8$ ratio and using a sintering temperature of 1400°C to yield a product that may be represented by the formula $La_{2/3}Ti_{1/3}O_{5/3}$. The procedure yielded a Ø10 mm disk with >95% of theoretical density. The compound has a melting temperature of around 1700°C.

**EXAMPLE 4**

**PREPARATION OF $Ti_{0.93}Zr_{0.07}O_2$**

A ceramic oxide heat exchanger material can be prepared according to the method of Example 1 except using the raw materials $TiC_{20}H_{28}O_8$ and $ZrC_{20}H_{28}O_8$, and using a calcination temperature of 1200°C to yield a product that may be represented by the formula $Ti_{0.93}Zr_{0.07}O_2$. The compound has a melting temperature of above 1800°C.

**EXAMPLE 5**

**PREPARATION OF $La_{0.85}Nd_{0.15}O_{1.5}$**

A ceramic oxide heat exchanger material can be prepared according to the method of Example 1 except using the raw materials $La_2O_3$ and $Nd_2O_3$ to yield a product that may be represented by the formula $La_{0.85}Nd_{0.15}O_{1.5}$. The compound has a melting temperature of above 1800°C.

**EXAMPLE 6**

**STRUCTURE OF $La_{0.5}Zr_{0.5}O_{1.75}$ AND $La_{0.5}Ti_{0.5}O_{1.75}$**

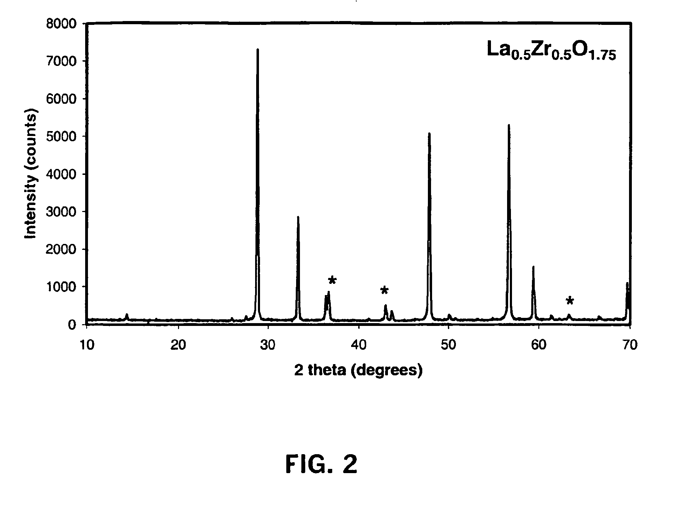

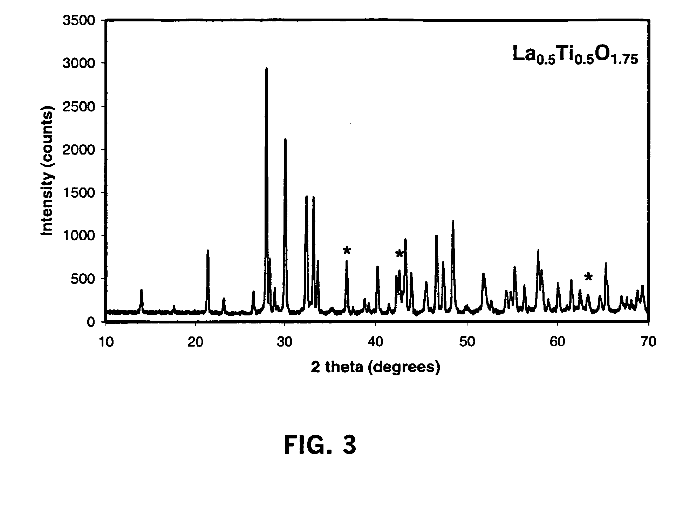

XRD diffractograms of the heat exchanger materials of Examples 1 and 2 are shown in FIGS. 2 and 3. Both materials are single phase and possess the pyrochlore structure.

**EXAMPLE 7**

**THERMAL EXPANSION OF $La_{0.5}Zr_{0.5}O_{1.75}$, $La_{0.5}Ti_{0.5}O_{1.75}$, AND $La_{2/3}Ti_{1/3}O_{5/3}$**

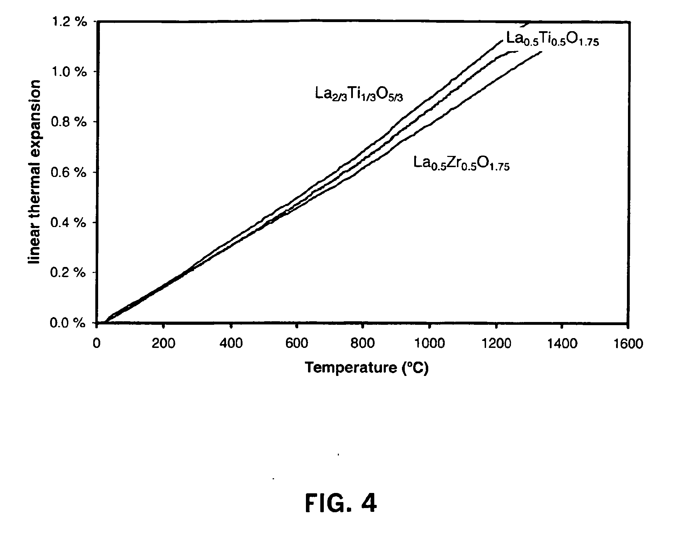

The heat exchanger material disks of Examples 1-3 were mounted in a Bähr DIL801L dilatometer, and heated at 6°C/min to 1400°C, while the relative change in length of the samples were recorded. The resulting linear thermal expansion characteristics of the three heat exchanger materials, $La_{0.5}Zr_{0.5}O_{1.75}$, $La_{0.5}Ti_{0.5}O_{1.75}$, and $La_{2/3}Ti_{1/13}O_{5/3}$, are shown in FIG. 4.

**EXAMPLE 8**

**CALCULATION OF HEAT TRANSFER IN A $La_{0.5}Zr_{0.5}O_{1.75}$ HEAT EXCHANGER**

Calculation of heat transfer in a $La_{0.5}Zr_{0.5}O_{1.75}$ heat exchanger was performed, assuming a thermal conductivity (k) of 1 W/(mK) for the $La_{0.5}Zr_{0.5}O_{1.75}$ material. For the calculation laminar flow between plates of 1 m length, 1mm thickness (d) and 2 mm spacing was assumed. The total pressure was 20 bar and the gas velocities 1 m/s. The high temperature gas contained 67% steam and 33% carbon dioxide at a temperature ($T_4$) of 1200°C, while the low temperature gas consisted of air at a temperature ($T_0$) of 1100°C. Standard equations gave heat transfer coefficients ($h_c$) of 242 W/($m^2$K) for the hot gas and 164 W/($m^2$K) for the cold gas. The heat transfer across the heat exchanger walls was then calculated by using the equations:

$$q = h_{c0}{}^{\star}(T_1 - T_0)$$

$$q = k^{\star}(T_2 - T_1)/d$$

$$q = h_{c4}{}^{\star}(T_4 - T_3)$$

where q is the heat flux, $h_{c0}$ is the heat transfer coefficient near the cold wall, $h_{c4}$ is the heat transfer coefficient near the hot wall, and $T_1$ and $T_2$ the cold and hot wall temperatures, respectively.

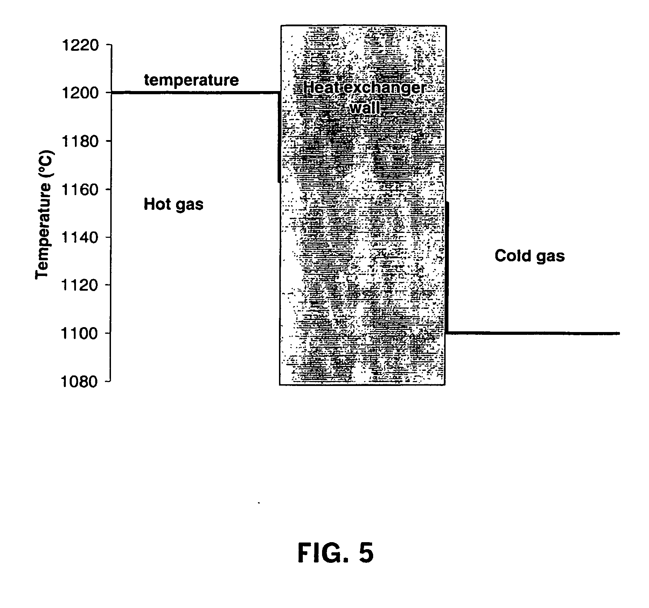

The calculations gave a heat flux of 8.9 kW/$m^2$ and showed that only 9% of the overall temperature difference between the gases occurred in the heat exchanger wall. The remaining 91% occurred in the solid-gas interfaces. The temperature profile from the cold gas through the wall to the hot gas is shown in Figure 5.

A similar calculation with a heat exchanger material with a thermal conductivity (k) of 100 W/(mK) gave a heat flux of 9.8 kW/$m^2$. Therefore, the thermal conductivity is of minor importance to the overall heat transfer.

**Claims**

1. A ceramic heat exchanger manufactured from an oxide material,
   **characterised in that**
   the material is represented by the formula:

   $$A_{1-x}B_xO_{(3+x+z)/2}$$

   where A is selected from the group consisting of La, Ce, Pr, Nd, Pm, Sm, Eu, Gd, Tb, Dy, Ho, Er, Tm, Yb, Lu, Y, and mixtures thereof, B represents Zr, Ti or Hf or mixtures thereof, x is greater than or equal to zero and less than one, and z is a number that renders the compound charge neutral and is greater than about -0.1 and less than about 0.2.

2. A ceramic heat exchanger according to claim 1,
   **characterised in that**
   x is equal to zero.

3. A ceramic heat exchanger according to claim 2,
   **characterised in that**
   A is predominantly representing La.

4. A ceramic heat exchanger according to claim 1,
   **characterised in that**
   x is greater than or equal to 0.48 and less than or equal to 0.52.

5. A ceramic heat exchanger according to claim 4,
   **characterised in that**
   A is predominantly representing La.

6. A ceramic heat exchanger according to claim 5,
   **characterised in that**
   B is substantially representing Zr.

7. A ceramic heat exchanger according to claim 1,
   **characterised in that**
   x is equal to 1/3, A is at least representing La, and B is at least representing Ti.

8. A ceramic heat exchanger according to claim 7,
   **characterised in that**
   B is predominantly representing Ti.

9. A ceramic heat exchanger according to claim 8,
   **characterised in that**
   A is predominantly representing La.


**Patentansprüche**

1. Aus einem Oxidmaterial hergestellter keramischer Wärmeaustauscher,
   **dadurch gekennzeichnet, dass**
   das Material durch die Formel:

$$A_{1-x}B_xO_{(3+x+z)/2}$$

   repräsentiert wird,
   wobei A ausgewählt ist aus der Gruppe bestehend aus La, Ce, Pr, Nd, Pm, Sm, Eu, Gd, Tb, Dy, Ho, Er, Tm, Yb, Lu, Y und Gemischen davon, B Zr, Ti oder Hf oder Gemische davon darstellt, x größer oder gleich Null ist und kleiner als eins, und z eine Zahl ist, welche die Verbindungsladung neutral gestaltet und größer ist als etwa -0,1 und kleiner als etwa 0,2.

2. Keramischer Wärmeaustauscher nach Anspruch 1,
   **dadurch gekennzeichnet, dass**
   x gleich Null ist.

3. Keramischer Wärmeaustauscher nach Anspruch 2,
   **dadurch gekennzeichnet, dass**
   A überwiegend La repräsentiert.

4. Keramischer Wärmeaustauscher nach Anspruch 1,
   **dadurch gekennzeichnet, dass**
   x größer oder gleich 0,48 und kleiner oder gleich 0,52 ist.

5. Keramischer Wärmeaustauscher nach Anspruch 4,
   **dadurch gekennzeichnet, dass**
   A überwiegend La repräsentiert.

6. Keramischer Wärmeaustauscher nach Anspruch 5,
   **dadurch gekennzeichnet, dass**
   B im Wesentlichen Zr repräsentiert.

7. Keramischer Wärmeaustauscher nach Anspruch 1,
   **dadurch gekennzeichnet, dass**
   x 1/3 ist, A wenigstens La repräsentiert und B wenigstens Ti repräsentiert.

**8.** Keramischer Wärmeaustauscher nach Anspruch 7,
**dadurch gekennzeichnet, dass**
B überwiegend Ti repräsentiert.

**9.** Keramischer Wärmeaustauscher nach Anspruch 8,
**dadurch gekennzeichnet, dass**
A überwiegend La repräsentiert.

**Revendications**

1. Échangeur de chaleur en céramique fabriqué à partir d'un matériau oxyde **caractérisé en ce que** le matériau est représenté par la formule :

$$A_{1-x}B_xO_{(3+x+z)/2}$$

dans laquelle A est choisi dans le groupe constitué de La, Ce, Pr, Nd, Pm, Sm, Eu, Gd, Tb, Dy, Ho, Er, Tm, Yb, Lu, Y et des mélanges de ceux-ci, B représente Zr, Ti ou Hf ou des mélanges de ceux-ci, x est supérieur ou égal à zéro et inférieur à un, et z est un nombre qui permet de neutraliser la charge du composé et est supérieur à environ -0,1 et inférieur à environ 0,2.

2. Échangeur de chaleur en céramique selon la revendication 1, **caractérisé en ce que** x est égal à zéro.

3. Échangeur de chaleur en céramique selon la revendication 2, **caractérisé en ce que** A représente majoritairement La.

4. Échangeur de chaleur en céramique selon la revendication 1, **caractérisé en ce que** x est supérieur ou égal à 0,48 et inférieur ou égal à 0,52.

5. Échangeur de chaleur en céramique selon la revendication 4, **caractérisé en ce que** A représente majoritairement La.

6. Échangeur de chaleur en céramique selon la revendication 5, **caractérisé en ce que** B représente essentiellement Zr.

7. Échangeur de chaleur en céramique selon la revendication 1, **caractérisé en ce que** x est égal à 1/3, A représente au moins La et B représente au moins Ti.

8. Échangeur de chaleur en céramique selon la revendication 7, **caractérisé en ce que** B représente majoritairement Ti.

9. Échangeur de chaleur en céramique selon la revendication 8, **caractérisé en ce que** A représente majoritairement La.

FIG. 1

**FIG. 2**

FIG. 3

## FIG. 4

FIG. 5

**EP 1 436 565 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6117560 A
- US 6258467 B